(19) Europäisches Patentamt
European Patent Office
Office européen des brevets

(11) EP 2 602 283 B1

(12) # EUROPÄISCHE PATENTSCHRIFT

(45) Veröffentlichungstag und Bekanntmachung des Hinweises auf die Patenterteilung:
**17.08.2016 Patentblatt 2016/33**

(51) Int Cl.:
***C08J 5/18*** (2006.01) ***B65D 81/34*** (2006.01)
***B32B 27/36*** (2006.01) ***B65B 25/22*** (2006.01)

(21) Anmeldenummer: **12007945.4**

(22) Anmeldetag: **26.11.2012**

(54) **Verwendung einer antimonfreien Polyesterfolie zur Herstellung von Folienbeuteln und -schläuchen mit hoher Temperaturresistenz**

Use of an antimony-free polyester film for the production of foil bags and film tubes with high temperature resistance

Utilisation d'une feuille de polyester sans antimoine pour la fabrication de sachets plastique et de manchons en film à haute résistance à la température

(84) Benannte Vertragsstaaten:
**CH DE FR GB IT LI LU NL PL TR**

(30) Priorität: **05.12.2011 DE 102011087740**

(43) Veröffentlichungstag der Anmeldung:
**12.06.2013 Patentblatt 2013/24**

(73) Patentinhaber: **Mitsubishi Polyester Film GmbH
65203 Wiesbaden (DE)**

(72) Erfinder:
- **Kliesch, Holger, Dr.
65462 Ginsheim-Gustavsburg (DE)**
- **Bennett, Cynthia, Dr.
55232 Alzey (DE)**
- **Kuhmann, Bodo
65594 Runkel (DE)**
- **Konrad, Matthias, Dr.
65830 Kriftel (DE)**
- **Hackl, Thomas
65510 Hünstetten (DE)**
- **Bauer, Stefanie
65474 Bischofsheim (DE)**

(74) Vertreter: **Schweitzer, Klaus et al
Plate Schweitzer Zounek
Patentanwälte
Rheingaustrasse 196
65203 Wiesbaden (DE)**

(56) Entgegenhaltungen:
**DE-A1-102007 045 581**
**US-A1- 2005 282 025**
**US-A1- 2007 134 382**
**US-A1- 2010 120 947**
**US-A1- 2010 209 722**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 602 283 B1

## Beschreibung

Die Erfindung betrifft die Verwendung von antimonfreien Polyesterfolien zur Herstellung von Folienbeuteln oder -schläuchen, die eine hohe Temperaturresistenz aufweisen, so dass sie mehr als eine Stunde in einem Ofen bei Temperaturen von 220 °C verbleiben können, ohne zu verspröden.

Transparente, orientierte Polyesterfolien sind seit langem bekannt. Folien, die aus einem antimonfreien Polyester hergestellt wurden, sind ebenfalls bekannt. Bratbeutel und -schläuche aus Polyesterfolie sind ebenfalls bekannt.

Folienbeutel zum Aufbacken von Brot und insbesondere Folienbeutel und -schläuche, in denen ein ganzes Gericht im Ofen gegart werden soll, müssen Temperaturen von oberhalb 200 °C für mehr als eine Stunde aushalten, ohne mechanisch zu versagen (z. B. durch Aufplatzen infolge von Versprödung). Aufgrund der hohen Temperaturresistenz von Polyethylenterephthalat (PET) werden in der industriellen Praxis nahezu ausschließlich Folienbeutel und -schläuche aus diesem Material eingesetzt.

Die klassischen Katalysatoren für die Herstellung von Polyestern sind nach wie vor Antimonverbindungen. Manche Antimonverbindungen können insbesondere in höheren Konzentrationen und häufiger Exposition eine gesundheitsschädliche Wirkung haben. Daher ist in der EU eine maximal zulässige Migration von Antimon aus einer Folie in ein Lebensmittel vorgeschrieben. Bei den hohen Verwendungstemperaturen in Ofenanwendungen ist die Antimonmigration erhöht und schon deswegen eine Reduktion des Antimongehaltes wünschenswert. Untersuchungen des Schweizer Bundesamts für Gesundheit zeigen, dass die Migrationsgrenze für Antimon bereits bei Ofentemperaturen von 180 °C in echten Lebensmitteln überschritten wird, teilweise erheblich (s. M. Haldimann, A. Blanc und V. Dudler, in Food Additives and Contaminants, 2007; 24(8): 860-868). Sogar viel geringere Spuren von Antimon aus PET werden in der Fachpresse als bedenklich diskutiert (z. B. W. Shotyk und M. Krachler in Environ. Sci. Technol., 2007, 41 (5), S. 1560-1563). Daher wäre für eine Anwendung im direkten Lebensmittelkontakt bei stark erhöhten Temperaturen die Verwendung einer antimonfreien Folie wichtig.

Eine für die Zwecke dieser Erfindung durchgeführte Analyse von mehr als 10 verschiedenen Bratfolienbeuteln und -schläuchen unterschiedlicher Hersteller zeigte jedoch in allen untersuchten Fällen das Vorhandensein von Antimon, wenn auch mit 50 - 110 ppm reduzierten Werten gegenüber antimonhaltigen Standardfolien (Standardfolie meist > 150 ppm). Oberhalb von 10 ppm ist Antimon mit gängigen Aufschluss- und Analyseverfahren gut nachweisbar, und eine Migration von Antimon aus einer Folie ist unter Auswahl geeigneter Bedingungen (hohe Temperatur > 100 °C in Lebensmitteln) ebenfalls nachweisbar.

Die Begründung für die Verwendung von Antimonverbindungen als Polykondensationskatalysator dürfte in der geringen Temperaturstabilität von antimonfreien Folien zu suchen sein. Die untersuchten kommerziell erhältlichen, ausschließlich mit einem Titankatalysator hergestellten Folien bestanden den Ofentest (s. Messmethoden) alle nicht. Germanium-katalysierte Folien waren noch schlechter als die Titan-katalysierten Folien.

Versuche, das Verhalten im Ofentest durch Inaktivierung des Katalysators durch Phosphorstabilisatoren, wie in JP 2007077220 beschrieben, zu verbessern, führten zwar zu einer verringerten Versprödung, aber noch nicht zu einem sicheren Bestehen des Ofentestes. Ebenso wenig konnte der Test durch Verringerung oder kompletten Verzicht auf Regenerateinsatz sicher bestanden werden. Auch hierdurch konnte nur eine graduelle Verbesserung erzielt werden. Zudem führt eine solche Reduktion zu einer erheblichen Verschlechterung der Wirtschaftlichkeit der Folienherstellung. Auch eine gezielte Auswahl des Umesterungskatalysators (untersucht wurden Zn, Mg und Mn) führte nicht zu Bratfolienbeuteln und -schläuchen, die den Ofentest sicher bestanden.

EP-A-2 164 079 beschreibt eine Elektroisolierfolie aus einem Polyester, der mindestens teilweise mittels Titankatalysator hergestellt wurde, wobei die Folie ein Gemisch aus Radikalfängern enthält, um eine höhere thermische Stabilität zu erzielen. Der hohe Gehalt an freiem Stabilisator und eine im Rahmen der Offenbarung mögliche Auswahl der Stabilisatoren kann aber zu Folien führen, die für die Anwendung im direkten Lebensmittelkontakt ungeeignet sind (z. B. durch Überschreiten von Migrationsgrenzwerten).

Für einen Bratfolienbeutel oder -schlauch ist nicht nur die thermische Stabilität und die Eignung aller Einsatzstoffe für den direkten Lebensmittelkontakt eine notwendige Voraussetzung, sondern auch eine geeignete Transparenz und Farbe, die dem Verwender eine gute Sicht auf das Bratgut ermöglicht, sowie eine geringe Eintrübung und Vergilbung beim Braten, um optisch eine gute Qualität zu vermitteln, sowie das Einhalten von bestimmten mechanischen Eigenschaften, die ein sicheres Handling des Beutels oder Schlauches vor und nach dem Braten ermöglichen.

Aufgabe der vorliegenden Erfindung war es daher, eine antimonfreie Folie zu identifizieren, die sich wirtschaftlich herstellen lässt und alle notwendigen Eigenschaften mitbringt, um daraus einen Bratfolienbeutel oder -schlauch herzustellen, der den Ofentest besteht.

Gelöst wird diese Aufgabe durch die Verwendung einer biaxial orientierten Folie, die

1. weniger als 10 ppm Antimon enthält,
2. eine Trübung von weniger als 10 % aufweist,
3. eine Reißfestigkeit in jeder Folienrichtung von mehr als 100 $N/mm^2$ aufweist,

4. einen Unterschied in der Reißfestigkeit in Maschinenrichtung (MD) und Breitenrichtung (TD) von kleiner als 180 $N/mm^2$ aufweist,
5. eine Reißdehnung von mehr als 50 % in jeder Folienrichtung aufweist,
6. in keiner Folienrichtung eine Reißdehnung von über 260 % aufweist,
7. einen Gelbwert b* von weniger als 2,5 aufweist,
8. eine Helligkeit L* > 85 aufweist
9. 50 bis 15000 ppm eines Radikalfängers enthält,
10. nach dem Ofentest einen Folien-SV-Wert von mindestens 600 aufweist,
11. nach dem Ofentest eine Reißdehnung von > 5 % in jeder Folienrichtung aufweist,
12. eine Foliendicke von 6 bis 26 μm aufweist und
13. zu mehr als 90 Gew.-% aus einem Polyester besteht,

zur Herstellung von Folienbeuteln oder-schläuchen.

Die Folie besteht zu mindestens 90 Gew.-% , bevorzugt zu mindestens 95 Gew.-% und idealerweise zu mindestens 97 Gew.-% aus einem thermoplastischen Polyester. Die restlichen Gew.-% sind dabei Radikalfänger, Zuschlagstoffe wie Partikel zur Optimierung der Wickelbarkeit etc.. Andere Polymere sind in einer bevorzugten Ausführungsform nicht enthalten. Geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bishydroxymethylcyclohexan und Terephthalsäure [= Poly(1,4-cyclohexandimethylenterephthalat, PCDT) und Polyester aus Isophthalsäure und Ethylenglykol sowie aus beliebigen Mischungen der genannten Carbonsäuren und Diole.

Besonders bevorzugt sind Polyester, die zu mindestens 85 Mol-%, bevorzugt mindestens 90 Mol-% und insbesondere mindestens 95 Mol-% aus von Ethylenglykol und Terephthalsäure abgeleiteten Einheiten (im Folgenden auch "Monomere" oder "Monomereinheiten" genannt) bestehen. Alle anderen Monomere als diese beiden erhöhen den Preis des Polymers und führen daher zu einer geringeren Wirtschaftlichkeit und sind weniger bevorzugt. Die restlichen Monomereinheiten stammen aus anderen aliphatischen, cycloaliphatischen oder aromatischen Diolen bzw. Dicarbonsäuren. Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist.

Die eingesetzten Polyester werden unter Verwendung einer geeigneten Titan- oder Aluminiumverbindung als Polykondensationkatalysator hergestellt. Antimonverbindungen sind als Polmerisationskatalysator unerwünscht, und der Gehalt an Antimon liegt unterhalb von 10 ppm, bevorzugt unterhalb von 2 ppm, und idealerweise enthält der zur Folienherstellung verwendete Polyester gar kein Antimon.

Die Folie enthält 50 -15000 ppm eines Radikalfängers, wobei der Gehalt bevorzugt zwischen 100 - 5000 ppm und insbesondere zwischen 150 -1000 ppm liegt. Niedrigere Gehalte als 50 ppm führen zu einem Versagen im Ofentest und höhere als 15000 ppm haben keine weitere verbessernde Wirkung auf die Folie und verringern daher nur die Wirtschaftlichkeit und können zu einer Migration des Stabilisators aus der Folie in das Bratgut führen.

Als Radikalfänger kann sowohl eine Verbindung als auch eine Mischung verschiedener Verbindungen eingesetzt werden; bevorzugt eine Verbindung. Bei Mischungen müssen gegebenenfalls die Migrationswerte aller Verbindungen der Folie gemessen werden, was zu höheren Kosten als bei der Verwendung einer einzigen Verbindung führt.

Der/die verwendete(n) Radikalfänger werden aus der Gruppe der phenolischen Antioxidantien bzw. aus der Gruppe der Antioxidantien ausgewählt, die mindestens das Strukturelement

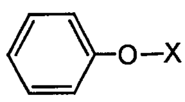

mit X = H oder einem organischen Rest, bevorzugt H, enthalten.

Die nachfolgenden Verbindungen weisen eine niedrige Toxizität und gute Eigenschaften als Radikalfänger auf und sind daher bevorzugte Radikalfänger im Sinne der Erfindung:

5,7-Di-tert-butyl-3-(3,4- und 2,3-Dimethylphenyl)-3H-benzofuran-2-on, enthaltend

a) 5,7-Di-tert-butyl-3-(3,4-dimethylphenyl)-3H-benzofuran-2-on (80 to 100 % w/w) und
b) 5,7-Di-tert-butyl-3-(2,3-dimethylphenyl)-3H-benzofuran-2-on (0 to 20 % w/w),

CAS-Nr. 88-24-4 = 2,2'-Methylen bis(4-ethyl-6-tert-butylphenol),
CAS-Nr. 96-69-5 = 4,4'-Thiobis(6-tert-butyl-3-methylphenol),
CAS-Nr. 119-47-1 = 2,2'-Methylen- bis(4-methyl-6-tert-butylphenol),
CAS-Nr. 128-37-0 = 2,6-di-tert-butyl-p-cresol,

CAS-Nr. 991-84-4 = 2,4-Bis(octylmercapto)-6-(4-hydroxy3,5-di-tert-butylanilino)-1,3,5-triazin,
CAS-Nr. 1709-70-2 = 1,3,5-Trimethyl-2,4,6-tris(3,5-di-tert-butyl-4-hydroxybenzyl)-benzol,
CAS-Nr. 1843-03-4 = 1,1,3-tris(2-methyl-4-hydroxy-5-tert-butylphenyl) butane,
CAS-Nr. 2082-79-6 = octadecyl 3-(3,5-di-tert-butyl-4-hydroxyphenyl)propionate,
CAS-Nr. 3135-18-0 = 3,5-di-tert-butyl-4-hydroxybenzylphosphonic acid, dioctadecyl ester,
CAS-Nr. 4130-42-1 = 2,6-di-tert-butyl-4-ethylphenol,
CAS-Nr. 6683-19-8 = pentaerythritol tetrakis[3-(3,5-di-tert-butyl-4-hydroxyphenyl)-propionate),
CAS-Nr. 23128-74-7 = 1,6-hexamethylene-bis(3-(3,5-di-tert-butyl-4-hydroxyphenyl) propionamide),
CAS-Nr. 25013-16-5 = tert-Butyl-4-hydroxyanisol,
CAS-Nr. 27676-62-6 = 1,3,5-Tris(3,5-di-tert-butyl-4-hydroxybenzyl)-1,3,5-triazin-2,4,6(1 H,3H,5H)-trion,
CAS-Nr. 32509-66-3 = Ethylenglykol-bis[3,3-bis(3-tert-butyl-4-hydroxyphenyl)butyrat],
CAS-Nr. 32687-78-8 = N,N'-Bis(3-(3,5-di-tert-butyl-4-hydroxyphenyl)propionyl)-hydrazid,
CAS-Nr. 35074-77-2 = 1,6-Hexamethylen-bis(3-(3,5-di-tert-butyl-4-hydroxyphenyl)-propionat),
CAS-Nr. 35958-30-6 = 1,1-Bis(2-hydroxy-3,5-di-tert-butylphenyl)ethan,
CAS-Nr. 36443-68-2 = Triethyleneglykol-bis[3-(3-tert-butyl-4-hydroxy-5-methylphenyl)propionat],
CAS-Nr. 40601-76-1 = Thiodiethanol-bis(3-(3,5-di-tert-butyl-4-hydroxyphenyl)-propionat),
CAS-Nr. 57569-40-1 = Terephthalsäure, Diester mit 2,2'-Methylenbis(4-methyl-6-tert-butylphenol),
CAS-Nr. 61167-58-6 = Acrylsäure, 2-tert-Butyl-6-(3-tert-butyl-2-hydroxy-5- methylbenzyl)-4-methylphenylester,
CAS-Nr. 65140-91-2 = 3,5-Di-tert-butyl-4-hydroxybenzylphosphonsäure-mono-ethylester, Calciumsalz,
CAS-Nr. 70331-94-1 = 2,2'-Oxamidobis[ethyl-3-(3,5-di-tert-butyl-4-hydroxyphenyl)-propionat],
CAS-Nr. 110553-27-0 = 2,4-bis(octylthiomethyl)-6-methylphenol,
CAS-Nr. 110675-26-8 = 2,4-bis(dodecylthiomethyl)- 6-methylphenol.

Radikalfänger mit dem erfindungsgemäßen Strukturelement sollten ein Molekulargewicht oberhalb von 300 und besonders bevorzugt von oberhalb 500 aufweisen, da Verbindungen mit niedrigeren Molekulargewichten unter den für Polyester typischen Verarbeitungstemperaturen eine zu hohe Flüchtigkeit aufweisen und so bei der Folienherstellung teilweise abdampfen. Dies kann zu Problemen bei der Herstellung führen (Dampfentwicklung, Geruch, Blasenbildung in der Folie etc.) und hat zudem den Nachteil einer höheren Migrationstendenz bei der Verwendung als Bratbeutel oder -schlauch. Dies gilt u. a. für die in der obigen Liste genannten Verbindungen mit den CAS-Nummern: 2082-79-6, 25013-16-5, 128-37-0. Verbindungen mit einem Molekulargewicht unterhalb von 300 werden daher bevorzugt zu weniger als 500 ppm und besonders bevorzugt zu weniger als 300 ppm und idealerweise gar nicht eingesetzt. Verbindungen mit einem Molekulargewicht unterhalb von 500 werden bevorzugt zu weniger als 1000 ppm und besonders bevorzugt zu weniger als 500 ppm und idealerweise gar nicht eingesetzt.

Verbindungen aus der obigen Liste, die Stickstoff enthalten, führten bei der Verwendung zu Folien mit höheren Gelbwerten. Dies ist unerwünscht, daher werden Radikalfänger mit Stickstoff in der Summenformel bevorzugt zu weniger als 1000 ppm, besonders bevorzugt zu weniger als 500 ppm und idealerweise gar nicht eingesetzt.

Radikalfänger mit Schwefel in der Summenformel wiesen bei der Herstellung der Folie einen charakteristischen, eher als unangenehm empfundenen Geruch auf und sind daher weniger bevorzugt. Radikalfänger mit Schwefel in der Summenformel werden bevorzugt zu weniger als 500 ppm, besonders bevorzugt zu weniger als 300 ppm und idealerweise gar nicht eingesetzt.

Besonders gute Eigenschaften hinsichtlich Thermostabilität, geringer Migration aus der Folie und Gelbfärbung wiesen die Verbindungen mit den CAS-Nr. 1709-70-2, 3135-18-0, 6683-19-8 und 57569-40-1 auf. Diese sind bevorzugte Radikalfänger im Sinne der Erfindung. Besonders bevorzugt sind dabei aus den genannten Gründen die Verbindungen mit den CAS-Nr. 1709-70-2 und 6683-19-8.

Der/die Radikalfänger können dem Polyester sowohl direkt bei der Polymerherstellung als auch später durch Einarbeiten der Verbindungen in einen fertigen Polyester zugegeben werden. Bei der Einarbeitung in einen fertigen Polyester hat sich CAS-Nr. 1709-70-2 (Irganox® 1330) als besonders geeignet erwiesen, da hierbei keine Blasenbildung oder Dampfentwicklung beobachtet wurde.

Die erfindungsgemäß verwendete Folie weist eine Dicke von 6 bis 26 μm auf. Bei weniger als 6 μm ist ein Handling der Folie durch den Endanwender nicht mehr sicher möglich, und es kann insbesondere leichter zu einem Einreißen der Folie bei der Verwendung kommen. Zudem weisen diese Folien ein ungünstiges Oberfläche-zu-Polymermenge-Verhältnis auf, was zu einer schnelleren Versprödung im Ofentest führt. Daher müssen dünnere Folien deutlich mehr Radikalfänger enthalten als dickere, und es kann dann zu einer unerwünschten größeren Migration des Radikalfängers aus der Folie kommen. Folien mit einer Dicke oberhalb von 26 μm weisen keinen weiteren Vorteil hinsichtlich der Stabilität auf und verringern nur die Wirtschaftlichkeit der daraus hergestellten Bratbeutel oder -schläuche. Idealerweise liegt die Foliendicke daher zwischen 8 und 15 μm.

Die Folie kann ein- oder mehrschichtig sein, wobei mehrschichtige Ausführungsformen bevorzugt sind, da sich hierdurch die erfindungsgemäß niedrige Trübung und Helligkeit leichter erreichen lässt (bei Zugabe von Antiblockadditiven werden diese bevorzugt in die Deckschichten gegeben). Bei mehrschichtigen Ausführungsformen muss/müssen der/die erfindungsgemäße(n) Radikalfänger in allen Schichten enthalten sein, und die erfindungsgemäße Untergrenze von 50 ppm darf in keiner Schicht unterschritten werden, da sonst der Ofentest nicht bestanden wird.

Alle Schichten können zusätzlich unabhängig voneinander übliche Additive, wie Antiblockmittel, enthalten. Bevorzugt werden diese Additive in den Deckschichten (Schichten A und C) eingesetzt. Sie werden in üblicher Weise dem Polymer bzw. der Polymermischung bereits vor dem Aufschmelzen zugesetzt. Zum Erreichen der erfindungsgemäßen Helligkeits- und Trübungswerte hat es sich als günstig erwiesen, wenn die Folie weniger als 1,5 Gew.-% und bevorzugt weniger als 0,9 Gew.-% und idealerweise weniger als 0,5 Gew.-% Antiblockmittel und andere Partikel oder Pigmente enthält.

Typische Antiblockmittel sind anorganische und/oder organische Partikel, beispielsweise kristalline oder amorphe Kieselsäure, Talk, Magnesiumcarbonat, Bariumcarbonat, Calciumsulfat, Lithiumphosphat, Calciumphosphat, Magnesiumphosphat, Aluminiumoxid, Aluminiumsilikate, Lithiumfluorid, Calcium-, Barium-, Zink- oder Mangan-Salze der eingesetzten Dicarbonsäuren, Titandioxid, Kaolin oder vernetzte Polystyrol- oder PMMA-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Antiblockmittel und die Pigmente können den einzelnen Schichten in den jeweils vorteilhaften Konzentrationen z. B. als glykolische Dispersion während der Polykondensation oder über Masterbatche bei der Extrusion zugegeben werden.

Die Folie weist eine Trübung von weniger als 10 % auf. Bevorzugt liegt die Trübung bei kleiner 5 % und idealerweise bei kleiner 3 %. Besonders vorteilhaft ist, dass die erfindungsgemäße Folie nach dem Ofentest eine Trübung von weniger als 15 %, bevorzugt von weniger als 8 % und besonders bevorzugt von weniger als 5 % aufweist. Dabei beträgt bevorzugt der Trübungsanstieg während des Ofentestes weniger als 5 % (absolut), besonders bevorzugt weniger als 3 % und ganz besonders bevorzugt weniger als 2 %. Sowohl eine hohe Trübung vor dem Ofentest als auch eine deutliche Erhöhung der Trübung beim Backen würden vom Nutzer als negativ bewertet werden, da ersteres eine schlechtere Durchsicht auf das Bratgut bedeutet und letzteres eine Veränderung der Folie beim Braten andeutet, was Anlass zu vermuteten Kontaminationen des Bratguts gibt. Ein niedriger Trübungsanstieg kann durch die erfindungsgemäße Auswahl der Stabilisatoren in den erfindungsgemäßen Mengen erreicht werden, insbesondere dann, wenn der Stabilisator eine geringe Ausgasungstendenz zeigt (hohes Molekulargewicht).

Die Helligkeit der Folie L* liegt bei größer 85, bevorzugt bei größer 90 und idealerweise bei größer 93,5. Der Gelbwert b* der Folie liegt bei kleiner 2,5, bevorzugt bei kleiner 2 und idealerweise bei kleiner 1,5.

Die Transparenz der Folien liegt in einer bevorzugten Ausführungsform bei größer 80 %, besser größer 88 %, idealerweise größer 90 %.

Diese optischen Eigenschaften führen zu einer Folie mit einem ansprechenden Aussehen und ermöglichen eine gute, unverfälschte Durchsicht auf das Bratgut. Zum Erreichen dieser Eigenschaften hat es sich als günstig erwiesen, wenn die oben genannten Mengenangaben für Antiblockmittel und Radikalfänger eingehalten werden.

Die Folie weist weiterhin eine Reißdehnung von mindestens 50 % in beiden Folienrichtungen auf. Bevorzugt liegt die Reißdehnung in beiden Folienrichtungen bei mindestens 60 % und idealerweise bei mindesten 75 %. Die Reißfestigkeit liegt in beiden Folienrichtungen bei mehr als 100 N/mm$^2$. Bevorzugt liegt die Reißfestigkeit in beiden Folienrichtungen bei mehr als 150 N/mm$^2$ und idealerweise bei mehr als 180 N/mm$^2$. Der Unterschied der Reißfestigkeit zwischen Maschinenrichtung (MD) und Breitenrichtung (TD) ist kleiner als 180 N/mm$^2$, bevorzugt kleiner als 120 N/mm$^2$ und idealerweise kleiner als 100 N/mm$^2$.

Die Reißdehnung liegt zudem in keiner Folienrichtung bei mehr als 260 % und liegt bevorzugt in keiner Folienrichtung oberhalb von 210 %. Diese mechanischen Eigenschaften führen zu einem guten Verarbeitungsverhalten der Folie und führen nach dem Braten zu einem guten Handling des Beutels bzw. Schlauchs. D. h. dieser lässt sich einreißen/einschneiden, aber der Riss/Schnitt pflanzt sich nicht unkontrolliert in irgendeiner Folienrichtung fort.

Diese Eigenschaften werden durch die Einhaltung der erfindungsgemäßen Dickenbereiche, den Herstellprozess (s. u.) und den oben beschriebenen Polyester erreicht, und es hat sich als günstig erwiesen, wenn die oben genannten Mengenangaben für Antiblockmittel und Radikalfänger eingehalten werden.

Nach dem Ofentest weist die Folie zudem eine Reißdehnung in jeder Folienrichtung von mehr als 5 %, bevorzugt von mehr als 10 % und idealerweise von mehr als 20 % auf. Nach dem Ofentest weist die Folie zudem einen SV-Wert von mindestens 600, bevorzugt von mindestens 650 und idealerweise von mindestens 750 auf. Dies führt dazu, dass der Beutel oder Schlauch auch nach dem Braten noch bruchfrei gehandhabt werden kann.

Es hat sich zudem als günstig erwiesen, wenn die Folie nach dem Ofentest einen Gelbwert b* von weniger als 4, bevorzugt von weniger als 3,5 und idealerweise von weniger als 3 aufweist, da eine stärkere Vergilbung vom Endanwender als ein Zeichen mangelnder Qualität gewertet wird. Dies wird erreicht, wenn erfindungsgemäße Radikalfänger in ausreichender Menge zugesetzt werden und insbesondere dann, wenn die besonders bevorzugten Stabilisatoren verwendet werden.

Die erfindungsgemäß verwendete Folie weist üblicherweise bei 150 °C einen Schrumpf in Längs- und Querrichtung von unter 5 %, bevorzugt unter 2,5 % und besonders bevorzugt von unter 2 % auf. Hierdurch wird eine unerwünschte Verkleinerung des Beutels oder Schlauchs beim Braten vermieden. Die Schrumpfeigenschaften werden durch den unten beschriebenen Prozess erreicht.

In einer weiteren bevorzugten Ausführungsform ist die Folie mindestens einseitig mit einer Haftvermittlung für Druckfarben beschichtet. Als Beschichtungen eignen sich beispielsweise Acrylate oder Copolyester mit Sulfoisophthalsäuregehalten von > 0,2 Gew.%.

In einer bevorzugten Ausführungsform weist die Folie auf jeder Oberfläche einen Ra-Wert von mindestens 30 nm, besser von mindestens 40 nm und idealerweise von mindestens 45 nm auf. Der Ra-Wert liegt bevorzugt auf keiner Oberfläche bei mehr als 150 nm, besser auf keiner Oberfläche bei mehr als 110 nm und idealerweise bei unter 100 nm. Zu niedrige Ra-Werte können zu einem statischen Zusammenkleben des Beutels oder Schlauchs führen, was es dem Endverbraucher erschwert, diesen zu öffnen. Zu hohe Ra-Werte können zu einer unerwünschten Trübung der Folie führen.

Verfahren

Die Polyester-Matrixpolymere der einzelnen Schichten werden durch Polykondensation hergestellt, entweder ausgehend von Dicarbonsäuren und Diol (sog. "PTA-Verfahren") oder auch ausgehend von den Estern der Dicarbonsäuren, vorzugweise den Dimethylestern und Diol (sog. "DMT-Verfahren"). Verwendbare Polyethylenterephthalate haben bevorzugt SV-Werte im Bereich von 700 bis 1000.

Zunächst wird das Polymere bzw. die Polymermischung der einzelnen Schichten in einem Extruder komprimiert und verflüssigt. Dann werden die Schmelzen durch eine Breitschlitzdüse gepresst und auf einer Kühlwalze und einer oder mehreren Abzugswalzen abgezogen, wobei sie abkühlen und sich verfestigen.

Die erfindungsgemäße Folie wird biaxial orientiert, d. h. biaxial gestreckt. Die biaxiale Verstreckung der Folie wird am häufigsten sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung, Breitenrichtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Statt der sequenziellen Streckung ist auch eine simultane Streckung der Folie möglich, aber nicht notwendig.

Die Temperatur, bei der die Streckung durchgeführt wird, kann in einem relativ großen Bereich variieren. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140 °C (Ende der Streckung) durchgeführt. Das Längsstreckverhältnis liegt im Bereich von 2,5:1 bis 5,5:1, bevorzugt von 3:1 bis 4,5:1, insbesondere zwischen 3,2 und 4. Das Querstreckverhältnis liegt allgemein im Bereich von 2,8:1 bis 5,5:1, bevorzugt von 3:1 bis 4,7:1 und insbesondere zwischen 3,2 und 4,5.

Vor der Querstreckung können eine oder beide Oberfläche(n) der Folie nach den an sich bekannten Verfahren in-line beschichtet werden. Die In-line-Beschichtung kann beispielsweise zu einer Verbesserung des antistatischen Verhaltens oder des Verarbeitungsverhaltens der Folie führen. Wenn die äußeren coextrudierten Schichten keine anorganische Partikel zur Verbesserung der Schlupf- und Wickelcharakteristik enthalten, kann an dieser Stelle eine partikelhaltige Beschichtung aufgebracht werden.

Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpf-/Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt. Bevorzugt finden <25 % und >5 % der Gesamtrelaxation innerhalb der ersten 25 % der Relaxationszeit statt. Anschließend wird die Folie in üblicher Weise aufgewickelt.

Bei der Herstellung der Folie ist gewährgeleistet, dass das Regenerat in einer Konzentration von 0 bis 80 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden. D. h. es tritt keine Gelbfärbung oder ein Versagen im Ofentest ein

Aus der erfindungsgemäßen Folie wird anschließend per Verklebung oder bevorzugt durch Verschweißen ein Folienbeutel oder -schlauch beliebiger Größe hergestellt.

Die Verwendung der erfindungsgemäßen Folie führt zu einem Bratbeutel oder -schlauch, der kein bzw. extrem wenig Antimon enthält, im Ofen nicht versprödet und sowohl optisch als auch in der Handhabung gute Eigenschaften aufweist.

Zur Charakterisierung der Rohstoffe und der Folien wurden die folgenden Messwerte benutzt:

**Rauigkeit**

Die Rauigkeit $R_a$ der Folie wird nach DIN 4768 bestimmt.

**Transparenz**

Die Transparenz wird nach ASTM-D 1003-61 Methode A bestimmt mittels haze-gard® plus der Firma BYK-Gardner GmbH Deutschland.

**Mechanische Eigenschaften**

Der E-Modul, die Reißfestigkeit, Reißdehnung und der $F_5$-Wert werden in Längs- und Querrichtung nach ISO 527 - 1 und 527 - 3 mit Hilfe eines Zug-Dehnungsmesser (Typ 010 der Fa. Zwick/DE) gemessen.

**Standardviskosität (SV)**

Die Standardviskosität SV wird - angelehnt an DIN 53726 - durch die Messung der relativen Viskosität $\eta_{rel.}$ einer 1 Gew.-%igen Polymerlösung in Dichloressigsäure (DCE) in einem Ubbelohde Viskosimeter bei 25 °C gemessen. Aus der relativen Viskosität $\eta_{rel.}$ wird der dimensionslose SV-Wert wie folgt ermittelt:

$$SV = (\eta_{rel.} - 1) \bullet 1000$$

**Schrumpf**

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\,TD}$ und $L_{0\,MD}$) und werden 15 min bei der angegeben Schrumpfungstemperatur (hier 150 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \bullet (L_{0\,MD} - L_{MD}) / L_{0\,MD}$$

$$\text{Schrumpf [\%] TD} = 100 \bullet (L_{0\,TD} - L_{TD}) / L_{0\,TD}$$

**Trübung**

Bestimmt nach ASTM-D 1003-61 (Methode A) mittels haze-gard plus der Firma BYK-Gardner GmbH Deutschland.

**Farbkennzahlen (CIE), Helligkeit, a*, b*, L***

Diese Werte werden am Spektralphotometer der Firma BYK, Deutschland, bestimmt.

Gerät: color-sphere
Die Bezeichnung des Messprogrammes lautet: auto-QC.

**Ofentest**

Ein Folienstück wird in einen Umluftofen eingebracht, der auf 220 °C vorgeheizt wurde. Die Folie wird dabei auf ein Drahtnetz gelegt. Die Folie verbleibt für 90 Minuten bei 220 °C im Ofen. Anschließend werden die mechanischen Eigenschaften, der Gelbwert und SV-Wert wie beschrieben bestimmt.

**Beispiele**

In den Beispielen kommen die folgenden Rohstoffe zu Einsatz:

PET1 = Polyethylenterephthalatrohstoff aus Ethylenglykol und Terephthalsäure mit einem SV-Wert von 820 und DEG-Gehalt von 0,9 Gew.-% (Diethylenglykolgehalt als Monomer). Hergestellt mittels PTA-Verfahren. Katalysator Antimontrioxid. Antimongehalt 250 ppm. Umesterungskatalysator Zinkacetat.

PET2 = Polyethylenterephthalatrohstoff aus Ethylenglykol und Terephthalsäure mit einem SV-Wert von 825 und DEG-Gehalt von 0,9 Gew.-% (Diethylenglykolgehalt als Monomer). Hergestellt mittels PTA-Verfahren. Katalysator Kaliumtitanyloxalat mit 18 ppm Titan. Antimongehalt 0 ppm. Umesterungskatalysator Zinkacetat.

PET3 = Polyethylenterephthalatrohstoff aus Ethylenglykol und Dimethylterephthalat mit einem SV-Wert von 800 und DEG-Gehalt von 1 Gew.-% (Diethylenglykolgehalt als Monomer) und 1,0 Gew.-% Siliziumdioxid-Pigment Sylobloc 44H mit einem $d_{50}$ von 2,5 µm. Hergestellt mittels DMT-Verfahren. Katalysator Kaliumtitanyloxalat mit 18 ppm Titan. Antimongehalt 0 ppm. Umesterungskatalysator Zinkacetat.

PET4 = 5000 ppm Irganox 1330 CAS-Nr. 1709-70-2 (Hersteller BASF Schweiz) eingearbeitet mittels eines Zweischneckenextruders in PET2. SV-Wert 700. Antimongehalt 0 ppm

PET5 = 5000 ppm Irganox 1098 CAS-Nr. 23128-74-7 (Hersteller BASF Schweiz) eingearbeitet mittels eines Zweischneckenextruders in PET2. SV-Wert 695. Antimongehalt 0 ppm

PET6 = Polyethylenterephthalatrohstoff aus Ethylenglykol und Dimethylterephthalat mit einem SV-Wert von 820 und DEG-Gehalt von 0,9 Gew.-% (Diethylenglykolgehalt als Monomer) und 1,0 Gew.-% Siliziumdioxid-Pigment Sylobloc 44H mit einem $d_{50}$ von 2,5 µm. Hergestellt mittels DMT-Verfahren. Katalysator Antimontrioxid. Antimongehalt 250 ppm. Umesterungskatalysator Zinkacetat.

**Verfahren für Beispiele**

Die Polymer-Mischungen werden in 3 Zweischnecken-Extrudern bei 290 °C aufgeschmolzen:
Die Polymermischungen werden in einem Adapter zusammenführt und durch eine Breitschlitzdüse auf eine auf 30 °C temperierte Kühlwalze elektrostatisch angelegt. Anschließend wird die Folie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,5 | |
| Querstreckung | Aufheiztemperatur | 100 | °C |
| | Strecktemperatur | 110 | °C |
| | Querstreckverhältnis | 4,0 | |
| Fixierung | Temperatur | 237-150 | °C |
| | Dauer | 2 | s |
| | Relaxation in TD bei 200 - 150 °C | 8 | % |

Die so erhaltene Folie hat eine Gesamtdicke von 12 µm, und die Deckschichten A und C sind beide 1,2 µm dick.

| | Beispiel 1 | Beispiel 2 | Vergleichsbeispiel 1 | Vergleichsbeispiel 2 |
|---|---|---|---|---|
| Rohstoffe | | | | |

(fortgesetzt)

| | Beispiel 1 | Beispiel 2 | Vergleichsbeispiel 1 | Vergleichsbeispiel 2 |
|---|---|---|---|---|
| A-Schicht | 10 Gew.% PET3/ 80 Gew% PET2 / 10 Gew.% PET4 | 10 Gew.% PET3 / 80 Gew% PET2 / 10 Gew.% PET5 | 10 Gew.% PET6 / 90 Gew% PET1 | 10 Gew.% PET3 / 90 Gew% PET2 |
| B-Schicht | 90 Gew. % PET2 / 10 Gew.% PET4 | 90 Gew. % PET2 / 10 Gew.% PET5 | 100 Gew. % PET1 | 100 Gew. % PET2 |
| C-Schicht | 10 Gew.% PET3 / 80 Gew% PET2 / 10 Gew.% PET4 | 10 Gew.% PET3 / 80 Gew% PET2 / 10 Gew.% PET5 | 10 Gew.% PET6/ 90 Gew% PET1 | 10 Gew.% PET3 / 90 Gew% PET2 |
| Antimongehalt in ppm | 0 | 0 | 250 | 0 |
| Folien SV | 790 | 781 | 787 | 788 |
| b* | 0,6 | 2,3 | 0,2 | 0,9 |
| b* nach Ofentest | 0,65 | 3,4 | 0,3 | 2,1 |
| SV nach Ofentest | 805 | 710 | 770 | 287 |
| Reißdehnung MD in % | 101 | 98 | 102 | 100 |
| Reißdehnung TD in % | 95 | 93 | 94 | 94 |
| Reißdehnung MD in % nach Ofentest | 75 | 53 | 79 | 3 |
| Reißdehnung TD in % nach Ofentest | 65 | 42 | 61 | 2 |
| Reißfestigkeit MD in $N/mm^2$ | 220 | 201 | 225 | 235 |
| Reißfestigkeit TD in $N/mm^2$ | 263 | 214 | 267 | 258 |
| Trübung in % | 1,9 | 2 | 1,8 | 1,9 |
| Trübung in % nach Ofentest | 2,9 | 6,3 | 6,7 | 21,3 |
| Transparenz in % | 91,5 | 89,8 | 91,3 | 91,1 |
| Schrumpf MD in % | 1,6 | 1,6 | 1,6 | 1,6 |
| Schrumpf TD in % | 0,2 | 0,2 | 0,2 | 0,2 |
| Helligkeit L* | 95,9 | 93,4 | 95,9 | 95,3 |

Die Rauheit $R_a$ aller Beispiele und Vergleichsbeispiele lag zwischen 54 und 63 nm

**Patentansprüche**

**1.** Verwendung einer biaxial orientierten Folie, die

a) weniger als 10 ppm Antimon enthält,
b) eine Trübung von weniger als 10 % aufweist,
c) eine Reißfestigkeit in jeder Folienrichtung von mehr als 100 $N/mm^2$ aufweist,
d) einen Unterschied in der Reißfestigkeit in Maschinenrichtung (MD) und Breitenrichtung (TD) von kleiner als 180 $N/mm^2$ aufweist,
e) eine Reißdehnung von mehr als 50 % in jeder Folienrichtung aufweist,
f) in keiner Folienrichtung eine Reißdehnung von über 260 % aufweist,
g) einen Gelbwert b* von weniger als 2,5 aufweist,
h) eine Helligkeit L* > 85 aufweist,
i) 50 bis 15000 ppm eines Radikalfängers enthält,
j) nach dem Ofentest einen Folien-SV-Wert von mindestens 600 aufweist,
k) nach dem Ofentest eine Reißdehnung von > 5 % in jeder Folienrichtung aufweist,
l) eine Foliendicke von 6 bis 26 $\mu$m aufweist und
m) zu mehr als 90 Gew.-% aus einem Polyester besteht,

zur Herstellung von Folienbeuteln oder-schläuchen.

**2.** Verwendung nach Anspruch 1, **dadurch gekennzeichnet, dass** die Folie einen oder mehrere Radikalfänger, ausgewählt aus der Gruppe, bestehend aus den Verbindungen mit den CAS-Nr. 1709-70-2, 3135-18-0, 6683-19-8 und 57569-40-1, enthält.

**3.** Biaxial orientierte Polyesterfolie, **dadurch gekennzeichnet, dass** sie

a) weniger als 2 ppm Antimon enthält,
b) eine Trübung von weniger als 5 % aufweist,
c) eine Reißfestigkeit in jeder Folienrichtung von mehr als 100 $N/mm^2$ aufweist,
d) einen Unterschied in der Reißfestigkeit in Maschinenrichtung (MD) und Breitenrichtung (TD) von kleiner als 180 $N/mm^2$ aufweist,
e) eine Reißdehnung von mehr als 50 % in jeder Folienrichtung aufweist,
f) in keiner Folienrichtung eine Reißdehnung von über 260 % aufweist,
g) einen Gelbwert b* von weniger als 2,5 aufweist,
h) eine Helligkeit L* > 90 aufweist,
i) 50 bis 15000 ppm eines Radikalfängers, ausgewählt aus der Gruppe, bestehend aus den Verbindungen mit den CAS-Nr. 1709-70-2, 3135-18-0, 6683-19-8 und 57569-40-1, enthält,
j) einen Schrumpf in MD und TD bei 150 ° C von kleiner 2,5 % aufweist,
k) eine Rauheit Ra von größer 40 nm und kleiner 110 nm aufweist,
l) eine Foliendicke von 6 bis 26 $\mu$m aufweist,
m) nach dem Ofentest einen Folien-SV von mindestens 600 aufweist,
n) nach dem Ofentest eine Reißdehnung von > 5 % in jeder Folienrichtung aufweist und
o) nach dem Ofentest einen Gelbwert b* von kleiner 4 aufweist.

## Claims

**1.** Use of a biaxially oriented film which

a) comprises less than 10 ppm of antimony
b) has a haze of less than 10 %
c) has an ultimate tensile strength of more than 100 $N/mm^2$ in every direction of the film
d) has a difference in the ultimate tensile strength in machine direction (MD) and transverse direction (TD) of less than 180 $N/mm^2$
e) has a tensile strain break of more than 50 % in every direction of the film
f) has a tensile strain break of more than 260 % in no direction of the film
g) has a yellowness index b* of less than 2.5
h) has a lightness L* > 85
i) comprises from 50 to 15 000 ppm of a free-radical scavenger
j) has a film SV value of at least 600 after the oven test
k) has a tensile strain break of > 5 % in every direction of the film after the oven test

l) has a film thickness of from 6 to 26 μm, and
m) is composed of more than 90 % by weight of a polyester,

for producing film bags or film tubes.

**2.** The use as claimed in claim 1, wherein the film comprises one or more free-radical scavengers selected from the group consisting of the compounds with the CAS number 1709-70-2, 3135-18-0, 6683-19-8 and 57569-40-1.

**3.** A biaxially oriented polyester film which

a) comprises less than 2 ppm of antimony
b) has a haze of less than 5 %
c) has an ultimate tensile strength of more than 100 N/mm$^2$ in every direction of the film
d) has a difference in the ultimate tensile strength in machine direction (MD) and transverse direction (TD) of less than 180 N/mm$^2$
e) has a tensile strain break of more than 50 % in every direction of the film
f) has a tensile strain break of more than 260 % in no direction of the film
g) has a yellowness index b* of less than 2.5
h) has a lightness L* > 90
i) comprises from 50 to 15 000 ppm of a free-radical scavenger selected from the group consisting of the compounds with the CAS number 1709-70-2, 3135-18-0, 6683-19-8 and 57569-40-1.
j) has a shrinkage in MD and TD of less than 2.5 % at 150 ° C
k) has a roughness Ra of more than 40 nm and less than 110 nm
l) has a film thickness of from 6 to 26 μm
m) has a film SV of at least 600 after the oven test
n) has a tensile strain break of > 5 % in every direction of the film after the oven test and
o) has a yellowness index b* of less than 4 after the oven test.

## Revendications

**1.** Utilisation d'une feuille orientée de manière biaxiale qui

a) contient moins de 10 ppm d'antimoine,
b) présente une opacité inférieure à 10%,
c) présente une résistance à la rupture dans chaque direction de la feuille supérieure à 100 N/mm$^2$,
d) présente une différence de la résistance à la rupture dans le sens machine (SM) et dans le sens de la largeur (SL) inférieure à 180 N/mm$^2$,
e) présente un étirement à la rupture supérieur à 50% dans chaque direction de la feuille,
f) ne présente aucun étirement à la rupture supérieur à 260% dans aucune direction de la feuille,
g) présente une valeur de jaune b* inférieure à 2,5,
h) présente une luminosité L* > 85,
i) contient de 50 à 15 000 ppm d'un agent piégeur de radicaux,
j) présente une valeur de VS de la feuille d'au moins 600 après le test au four,
k) présente un étirement à la rupture > 5% dans chaque direction de la feuille après le test au four,
l) présente une épaisseur de feuille de 6 à 26 μm et
m) est constituée à plus de 90% en poids d'un polyester,

pour la fabrication de sachets en films ou de manchons.

**2.** Utilisation selon la revendication 1, **caractérisée en ce que** la feuille contient un ou plusieurs agents piégeurs de radicaux choisis dans le groupe constitué de composés avec les numéros CAS 1709-70-2, 3135-18-0, 6683-19-8 et 57569-40-1.

**3.** Feuille de polyester orientée de manière biaxiale, **caractérisée en ce qu'**elle

a) contient moins de 2 ppm d'antimoine,
b) présente une opacité inférieure à 5%,

c) présente une résistance à la rupture dans chaque direction de la feuille supérieure à 100 N/$mm^2$,
d) présente une différence de la résistance à la rupture dans le sens machine (SM) et dans le sens de la largeur (SL) inférieure à 180 N/$mm^2$,
e) présente un étirement à la rupture supérieur à 50% dans chaque direction de la feuille,
f) ne présente aucun étirement à la rupture supérieur à 260% dans aucune direction de feuille,
g) présente une valeur de jaune b* inférieure à 2,5,
h) présente une luminosité L* > 90,
i) contient de 50 à 15 000 ppm d'un agent piégeur de radicaux choisi dans le groupe constitué de composés avec les numéros CAS 1709-70-2, 3135-18-0, 6683-19-8 et 57569-40-1,
j) présente un rétrécissement dans les SM et SL à 150°C de moins de 2,5%,
k) présente une rugosité supérieure à 40 nm et inférieure à 110 nm,
l) présente une épaisseur de feuille de 6 à 26 µm,
m) présente une valeur de VS de la feuille d'au moins 600 après le test au four,
n) présente un étirement à la rupture > 5% dans chaque direction de feuille après le test au four, et
o) présente une valeur de jaune b* inférieure à 4 après le test au four.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2007077220 B
- EP 2164079 A


### In der Beschreibung aufgeführte Nicht-Patentliteratur


- **M. HALDIMANN ; A. BLANC ; V. DUDLER.** *Food Additives and Contaminants,* 2007, vol. 24 (8), 860-868
- **W. SHOTYK ; M. KRACHLER.** *Environ. Sci. Technol.,* 2007, vol. 41 (5), 1560-1563